# EUROPEAN PATENT APPLICATION

(11) **EP 1 721 733 A1**
(43) Date of publication of application: **15.11.2006**
(21) Application number: 04716702.8
(22) Date of filing: 03.03.2004
(51) Int. Cl.: B32B 9/00, B32B 33/00

(54) **DECORATIVE MEMBER AND PROCESS FOR PRODUCING THE SAME**

(71) Applicant: MITSUBISHI DENKI KABUSHIKI KAISHA, Tokyo 100-8310 (JP)
(72) Inventor: SUZUKI, Yasuyuki, c/o Mitsubishi Denki K.K., Tokyo 100-8310 (JP)
(74) Representative: HOFFMANN EITLE
(86) International application number: PCT/JP2004/002647
(87) International publication number: WO 2005/084938

(57) **Abstract**

Provided are a decorative member used as a decorative panel for elevator and the like and a method of manufacturing the decorative member. The decorative member includes a base material 11 made from an inorganic material, a coating layer 12 which is formed on a surface of this base material and contains organosilane, a thermoplastic resin layer 13 which is heated and solvent welded onto this coating layer by vacuum contact bonding, and an ink receiving layer 15 superposed on this thermoplastic resin layer in such a manner that a surface on which a color pattern 16 by a coloring material is formed is in contact with the thermoplastic resin layer without an adhesive, and which is bonded onto the base material by the solvent welding of the thermoplastic resin layer itself which occurs due to the vacuum contact bonding. The method of manufacturing the decorative member includes the step of fabricating a pattern sheet 18 having an ink receiving layer 15 in which a color pattern 16 by a coloring material is formed, the step of superposing a thermoplastic resin layer and the pattern sheet on a base material 11 so that a surface of the pattern sheet which is bonded to a surface of the base material made from an inorganic material and on which a color pattern is formed is bonded to the thermoplastic resin layer without an adhesive, and the step of heating and solvent welding the thermoplastic resin layer by vacuum contact bonding, thereby to bond the pattern sheet onto the base material.

## Description

### Technical Field

The present invention relates to a decorative member in which color patterns are formed on a base material made from an inorganic material, such as metal decorative panels which are used, for example, in the door of an elevator platform, the door of an elevator car and the walls of an elevator car, and a method of manufacturing the decorative member.

### Background Art

When metal decorative panels which are used, for example, in the door of an elevator platform, the door of an elevator car and the walls of an elevator car are manufactured, there is available a conventional method by which a pattern sheet on which color patterns are printed is stuck to a metal base material, to the surface of which a substrate paint flayer is applied, via an adhesive. A pattern sheet used in this method is fabricated by forming an ink receiving layer on a transparent polyester film and printing color patterns by pigment ink onto this ink receiving layer.

In a conventional method of manufacturing a metal decorative panels as described above, a pattern sheet and a substrate paint layer are bonded together with an adhesive. However, a sufficient adhesive power cannot be obtained simply by bonding and it is difficult to uniformly bond a pattern sheet having a large area to the whole substrate paint layer. Therefore, it was necessary that a pattern sheet and a substrate paint layer be strongly and uniformly bonded together.

In buildings, nowadays sick house measures are demanded and in a case where a large area is bonded with an adhesive, there is a strong possibility that toxic substances such as formaldehyde which becomes an issue may remain and, therefore, there is a strong possibility that an adhesive cannot be used.

Furthermore, when painting is used in a substrate, it takes considerable time before the adhesion of a pattern sheet. Thus painting requires time and cost.

As an improvement on such a method of manufacturing a metal decorative panel, there is known, for example, the Japanese Patent Laid-Open No. 2001-18351. The method of manufacturing a metal decorative panel shown in this patent specification involves forming micro irregularities on the surface of a metal base material by plastic deformation, forming a coating layer containing organosilane on the micro irregularities, and solvent welding a thermoplastic resin layer of a pattern sheet onto this coating layer, whereby the base material and the thermoplastic resin layer are strongly bonded together by the action of the organosilane.

However, because in this method of manufacturing a metal decorative panel, an ink receiving layer is bonded onto a thermoplastic resin layer via an adhesive layer, this posed the problem of toxic substances such as formaldehyde. Also, excess manufacturing time was required, causing a cost rise. Furthermore, this method was not yet adequate for obtaining a quality finish with a luster on the surface and a high-durability ornamental design surface.

The present invention has been made to solve these conventional problems and has as its object the provision of a decorative member which can strongly and uniformly bond a pattern sheet onto a base material and a method of manufacturing this decorative member.

### Disclosure of the Invention

A decorative member of the present invention comprises a base material made from an inorganic material, a coating layer which is formed on a surface of this base material and contains organosilane, a thermoplastic resin layer which is heated and solvent welded onto this coating layer by vacuum contact bonding, and an ink receiving layer superposed on this thermoplastic resin layer in such a manner that a surface on which a color pattern by a coloring material is formed is in contact with the thermoplastic resin layer without an adhesive, and which is bonded onto the base material by the solvent welding of the thermoplastic resin layer itself which occurs due to the vacuum contact bonding. As a result of this, it is possible to strongly and uniformly bond the pattern sheet having an ink receiving layer onto the base material without using an adhesive.

A method of manufacturing a decorative member of the present invention comprises the step of fabricating a pattern sheet having an ink receiving layer in which a color pattern by a coloring material is formed, the step of superposing a thermoplastic resin layer and the pattern sheet on a base material so that a surface of the pattern sheet which is bonded to a surface of the base material made from an inorganic material and on which a color pattern is formed is bonded to the thermoplastic resin layer without an adhesive, and the step of heating and solvent welding the thermoplastic resin layer by vacuum contact bonding, thereby to bond the pattern sheet onto the base material.

As a result of this, it is possible to strongly and uniformly bond the pattern sheet onto the base material without using an adhesive. Also, the manufacturing time can be substantially shortened. In a decorative member thus manufactured, the color pattern is sandwiched between the ink receiving layer and the thermoplastic resin layer after the completion of vacuum contact bonding and, therefore, the decorative member becomes less susceptible to affects from the outside. For this reason, the decorative member is less susceptible to effects of scratching and cleaning work after the completion of working and a quality finish with a luster on the surface is obtained by a simple process. Furthermore, the use of vacuum contact bonding enables matter detrimental to ornamental design, such as dust, from mixing in between the pattern sheet, the thermoplastic resin layer and the base material.

### Brief Description of the Drawings

Figure 1 is a sectional view of a decorative member in the first embodiment of the present invention;
Figure 2 is a partial sectional view of a pattern sheet used to manufacture a decorative member in the first embodiment of the present invention;
Figure 3 is a perspective view which shows the condition of a pattern sheet during manufacturing;
Figure 4 is a perspective view which shows the step of printing a color pattern in an ink receiving layer of a pattern sheet;
Figure 5 is a sectional view which shows a pattern sheet superposed on a base sheet in panel form;
Figure 6 is a perspective view of an evacuation bed used to manufacture a decorative member of the present invention;
Figure 7 is an exploded perspective view which shows principal parts of a vacuum contact bonding device used to manufacture a decorative member of the present invention;
Figure 8 is a perspective view which shows the assembled condition of the vacuum contact bonding device of Figure 7;
Figure 9 is a perspective view of another example of the assembled condition of the vacuum contact bonding device;
Figure 10 is a sectional view of the assembled condition of the vacuum contact bonding device of Figure 7;
Figure 11 is a sectional view which shows the evacuated condition of the vacuum contact bonding device of Figure 10;
Figure 12 is a sectional view which shows the step immediately before the completion of manufacturing in which a separator which has become unnecessary is peeled off after the completion of vacuum contact bonding;
Figure 13 is an explanatory drawing to explain the action of organosilane contained in a coating layer;
Figure 14 is an explanatory drawing which shows how the base material, coating layer and thermoplastic resin layer of Figure 13 are bonded together; and
Figure 15 is a perspective view of a method of manufacturing a decorative member in the second embodiment of the present invention.

### Best Mode of Carrying Out the Invention

The present invention will be described in further detail with reference to the accompanying drawings.

### First embodiment

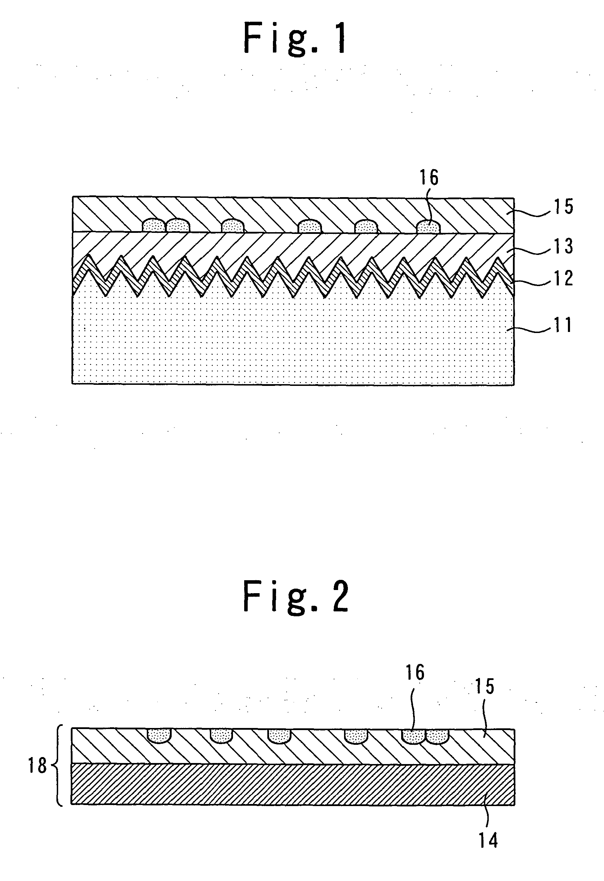

Figure 1 is a partial sectional view of a decorative member manufactured by a method of manufacturing a decorative member in the first embodiment of the present invention, and an example of a decorative panel for elevator is shown here. In the figure, a transparent coating layer 12 is formed on a surface of an inorganic base material 11 which is bent in panel shape. The base material 11 is made of metals such as copper, iron, titanium, aluminum alloys, stainless steel alloys, glass, etc. singly or in combination. A coating agent called organosilane is applied to the coating layer 12. The organosilane is, for example, vinyltrimethoxysilane, vinyltriethoxysilane, vinyl-tris(β-methoxyethoxy)silane, β-(3,4-epoxycyclohexyl)ethyltrimethoxysilane, γ-gylcidoxypropyltrimethoxysilane, γ-gylcidoxypropylmethyldiethoxysilane, γ-gylcidoxypropyltriethoxysilane, γ-gylcidoxypropylmethyldimethoxysilane, γ-methacrylopropyltrimethoxysilane, γ-methacryloxypropyltriethoxysilane, γ-methacryloxypropylmethyldiethoxysilane, γ-methacryloxypropylmethyldiethoxysilane, N-β(aminoetyl) γ-aminopropylmethyldiethoxysilane, N-β(aminoetyl)γ-aminopropyltriethoxysilane, N-β(aminoetyl)γ-aminopropyltrimethoxysilane, γ-aminopropyltrimethoxysilane, γ-aminopropyltriethoxysilane, γ-mercaptopropyltriethoxysilane, etc.

A method of performing the step of coating the surface of the base material 11 with the transparent coating layer 12 will be described. First, the inorganic base material 11 is degreased. This is carried out by immersing the inorganic base material 11, for example, for several minutes to several tens of minutes in a bath in which the temperature of, for example, acetone, a surfactant, alcohol, etc. are set at temperatures from room temperature to boiling points.

Next, washing with tap water is performed by using a technique such as spraying and immersion. The temperature of the tap water in this case is room temperature or temperatures near room temperature. Subsequently, washing with purified water is performed by using a technique such as spraying and immersion. The temperature of the purified water in this case is room temperature or temperatures near room temperature. After that, drying is performed, for example, for several minutes to several tens of minutes.

After drying, the coating with organosilane is performed. The organosilane is diluted with a low boiling point solvent, such as alcohol and ether, to 1 to 10 odd percent or so into a liquid state. The surface of the base material 11 is coated with this organosilane by using a technique such as spraying and immersion, for example. After that, the drying stage is started and drying is performed at temperatures, for example, from 50°C to 100°C or so in a drying chamber, for example, for several minutes to several tens of minutes.

A thermoplastic resin layer 13 is formed on the transparent coating layer 12.

On the thermoplastic resin layer 13, a transparent ink receiving layer 15 is bonded by the solvent welding of the thermoplastic resin layer 13. This ink receiving layer 15 is made from a material which contains a thermosetting resin the crosslinked polymerization of which proceeds due to heating, for example, water-dispersing resins, polyester resins, polyurethane resins, etc. In the ink receiving layer 15, a color pattern 16 by a pigment ink as a coloring material is formed.

Figure 2 is a partial sectional view of a pattern sheet 18 used to manufacture a decorative member in the first embodiment of the present invention. In the figure, the ink receiving layer 15 is formed on a separator 14. The color pattern 16 is printed on the ink receiving layer 15.

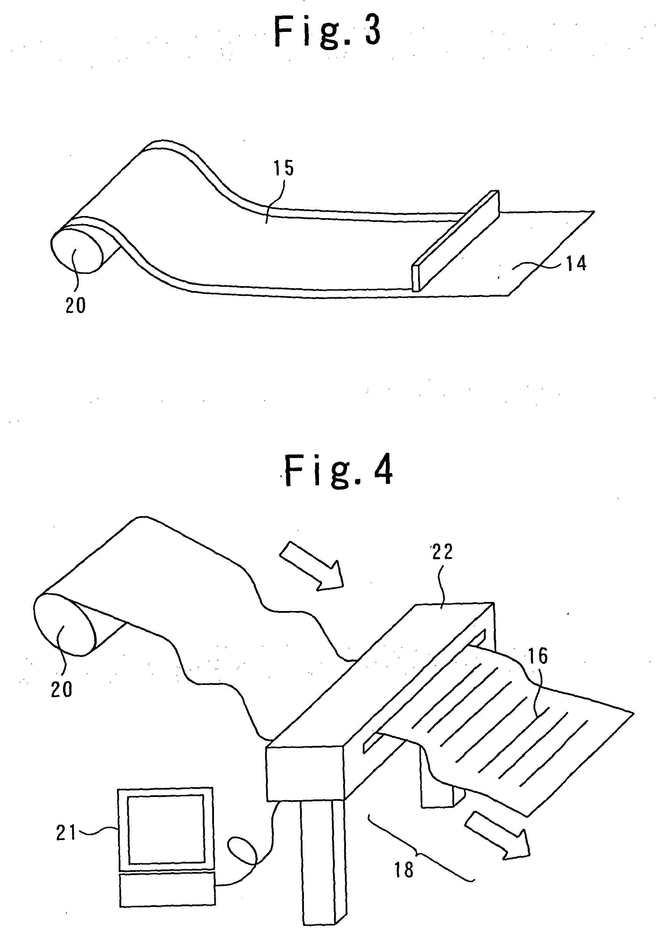

Next, a method of manufacturing the pattern sheet 18 of Figure 2 will be described. First, as shown in Figure 3, as the material for the separator 14, paper coated with a polyester film, a polycarbonate film, a vinyl chloride film, a fluorine film, a silicon film, etc. can be enumerated. A resin which becomes the material for the ink receiving layer 15 is applied to the surface of the separator 14 which is made from this coated paper. The ink receiving layer 15 is formed by drying this resin. After that, the pattern sheet is taken up as a sheet laminate 20 via the drying step.

After that, as shown in Figure 4, a color pattern 16 is printed on the ink receiving layer 15 before setting which is exposed from the taken-up sheet laminate 20, and as shown in Figure 2, the ink receiving layer 15 is formed on the separator 14 and the pattern sheet 18 in which the color pattern 16 is printed in the ink receiving layer 15 is manufactured. The printing of the color pattern 16 can be performed very easily by use of an inkjet printer 22 which is connected to a computer 21.

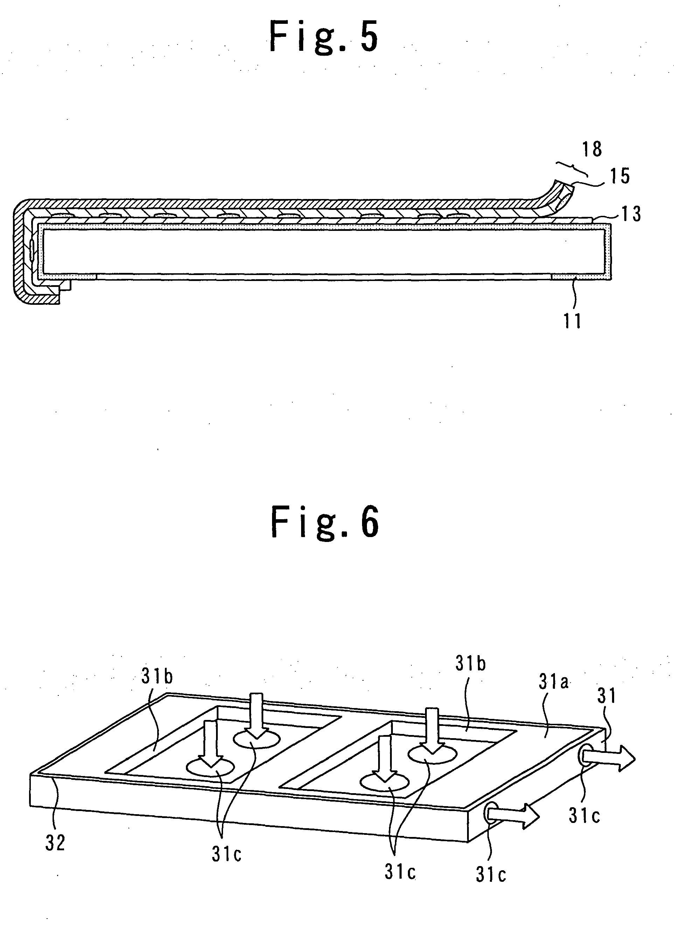

In the pattern sheet 18 thus manufactured, as shown in Figure 5, on the inorganic base material 11 which is bent in panel shape, the thermoplastic resin layer 13 is superposed in such a manner as to come into contact with the coating layer 12 on the base material 11 and so that the ink receiving layer 15 of the pattern sheet 18 and the thermoplastic resin layer 13 come into contact with each other. And in this superposed state, vacuum contact bonding is performed and the thermoplastic resin layer 13 is heated and melted. During the heating and pressurization by this vacuum contact bonding, the thermosetting of the ink receiving layer 15 proceeds, with the result that the ink receiving layer 15 loses its initial water absorption properties and sets in a condition including the color pattern 16.

Next, the step of vacuum contact bonding the pattern sheet 18 onto the base material 11 will be concretely described. First, Figure 6 is a perspective view of an evacuation bed used to manufacture a decorative member of the present invention. In the figure, an evacuation bed 31 in the form of a flat plate has a plane portion 31a on which the base material 11 is placed, multiple concavities 31b provided in this plane portion 31a, and multiple evacuation passages 31c to evacuate the interior of these concavities 31b. On the peripheral border portion of the plane portion 31a, packing 32 to keep the airtightness of the plane portion 31a is provided along the full circumference in a continuous manner.

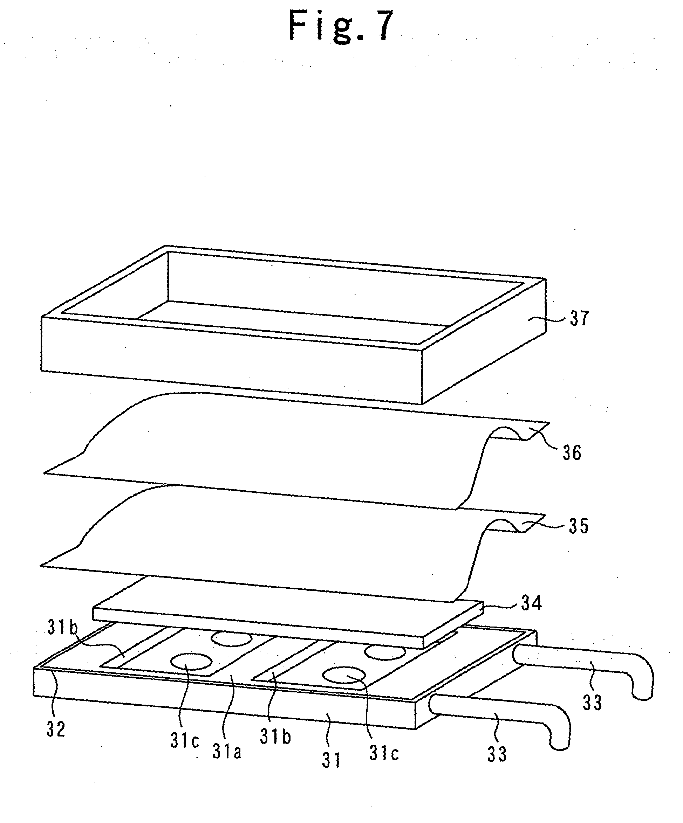

Figure 7 is an exploded perspective view which shows principal parts of a decorative member fabrication device having the evacuation bed 31 of Figure 6, i.e., a vacuum contact bonding device. Multiple evaluation pipes 33 to connect the evacuation passages 31c to an evacuation pump (not shown) are connected to the side surface portions of the evacuation bed 31. A panel body 34 formed by superposing the pattern sheet 18 on the base material 11 is placed on the plane portion 31a. The panel body 34 is covered with an elastic body 35 having air permeability in the form of a sheet. As the material for this elastic body 35, materials having heat resistance and flexibility, such as resins, glasses and metals, are used. They are, for example, silicone rubber sponge, Teflon sponge, polyamide sponge, a silicone fiber sheet, a Teflon fiber sheet, a polyamide fiber sheet, a glass fiber sheet, glass fiber cotton, stainless steel wool, titanium wool and aluminum wool. The elastic body 35 is covered with a sheet-like cover 36 which is in contact with the packing 32 along the whole circumference and keeps the space between the elastic body and the plane portion 31a airtight. As the material for this cover 36, for example, a rubber sheet, a polyethylene sheet, a silicone rubber sheet, etc. are used. The peripheral border portion of the cover 36 is supported by being sandwiched between a holding frame 37 and the packing 32. As the material for the holding frame 37, for example, materials having sufficient rigidity and heat resistance, such as metals, FPR, polyamide resins and cement, are used.

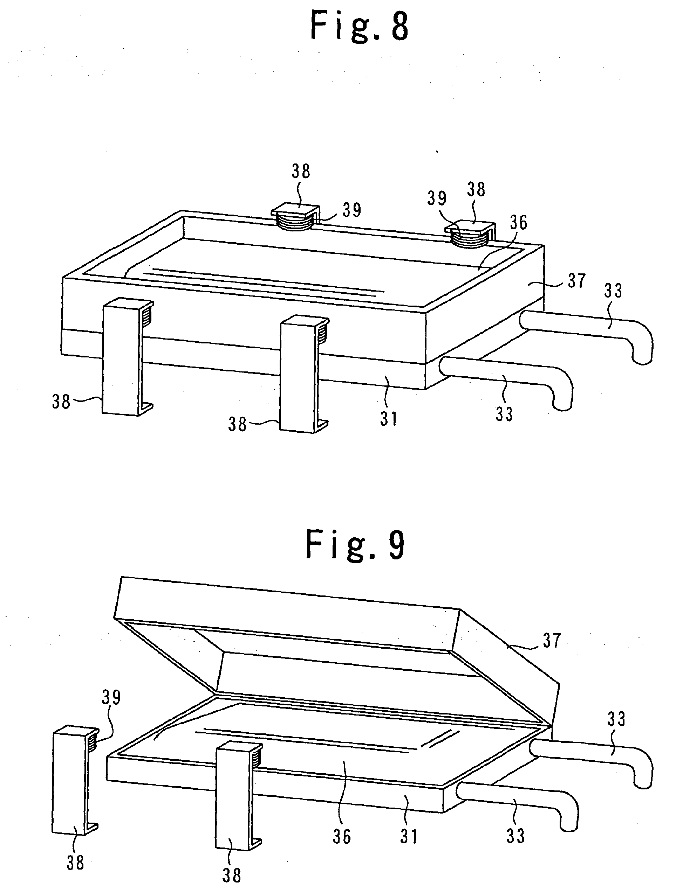

Figure 8 is a perspective view which shows the assembled condition of the vacuum contact bonding device of Figure 7. Multiple holding metal pieces 38 which hold the holding frame 37 against the packing 32 are mounted on the side portions of an assembled body of the evacuation bed 31 and pushing frame 37. A pressurization adjusting mechanism 39 such as a spring is provided in each of the holding metal pieces 38.

Incidentally, as shown in Figure 9, one side of the holding frame 37 and one side of the evacuation bed 31 may be connected to each other by use of a hinge mechanism. In this case, it becomes easy to position the holding frame 37 with respect to the evacuation bed 31 and workability is improved. Also, the holding frame 37 and the evacuation bed 31 may be connected together by use of a pantograph mechanism (not shown).

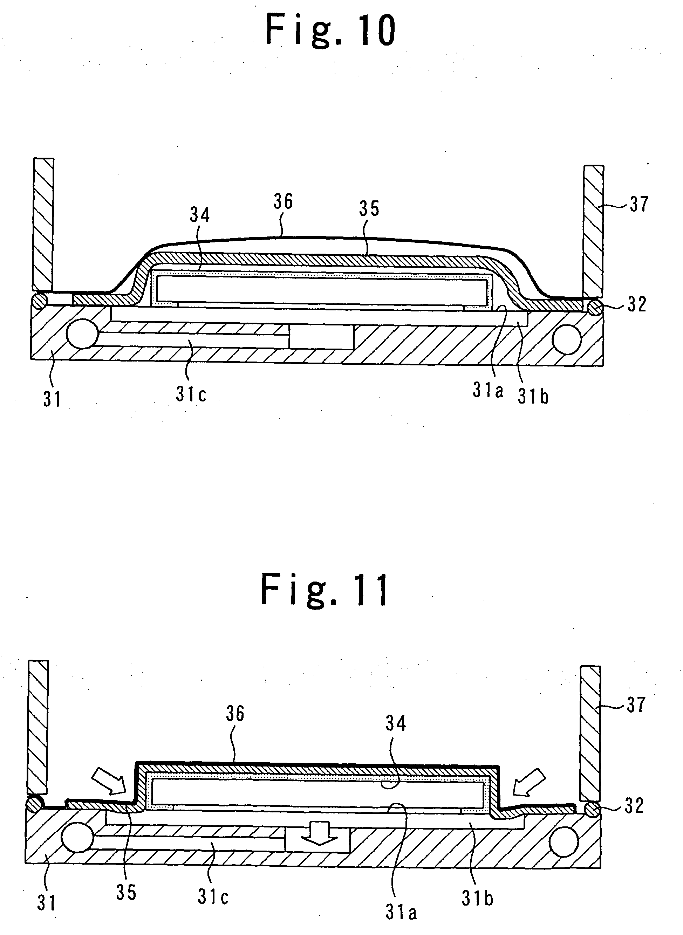

Next, Figure 10 is a sectional view of the assembled condition of the vacuum contact bonding device of Figure 7. In this condition, evacuation has not yet been started. From this state an evacuation pump is driven, and the evacuation of the interior of the concavity 31b is formed through the evacuation passages 31c. As a result of this, the air between the cover 36 and the evacuation bed 31 is exhausted, with the result that as shown in Figure 11, the cover 36 is pushed against the panel body 34 under atmospheric pressure, leading to the compression of the elastic body 35. Also, the air between the pattern sheet 18 and the coating layer 12 is removed and airtightness is improved.

After that, the vacuum contact bonding device in an evacuated condition is put into a drying furnace (not shown), and the panel body 34, along with the vacuum contact bonding device, is heated. This heating increases the flexibility of the cover 36, and the cover 36 is pushed against the panel body 34 under atmospheric pressure down to finer parts. As a result of this, the pattern sheet 18 is pushed under a uniform pressure against the surface of the base material 11 via the elastic body 35. Therefore, the pattern sheet 18 is contact bonded to the base material 11 with a sufficient and uniform strength.

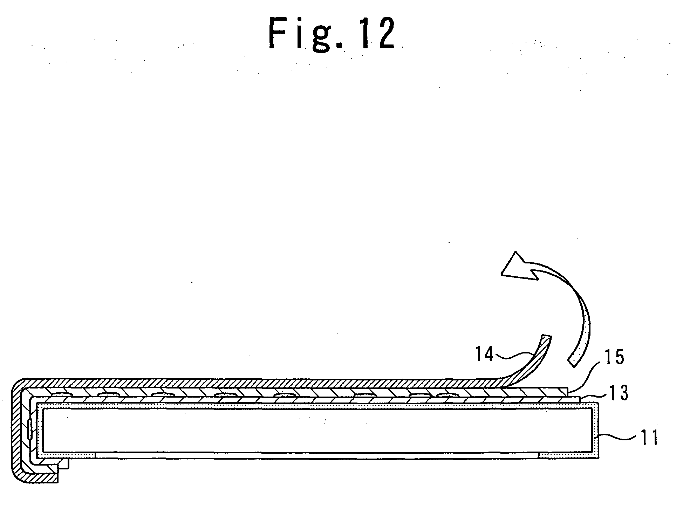

When vacuum contact bonding is thus completed, as shown in Figure 12, the separator 14 which has become unnecessary is peeled off and the manufacturing process is completed.

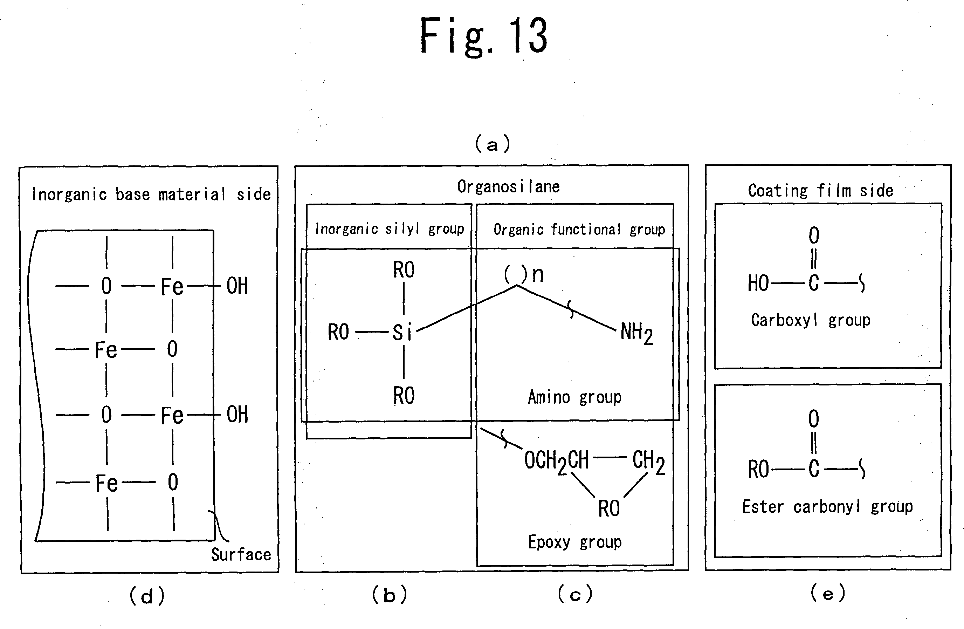

The action of the organosilane contained in the coating layer 12 will be described. Figure 13 is an explanatory drawing to explain the action of organosilane contained in a coating layer 12. Organosilane has an inorganic silyl group and an organic functional group. The organic functional group is, for example, an amino group, an epoxy group, a methacryloxy group, a vinyl group, etc. When a steel sheet, for example, is used as the base material 11, the molecular arrangement on the base material 11 side is such that Fe and O are alternately arrayed (iron oxide), with hydroxyl groups bonded to the surface. Furthermore, on the end surface on the thermoplastic resin layer 13 side, for example, a carboxyl group, an ester carbonyl group, etc. are present.

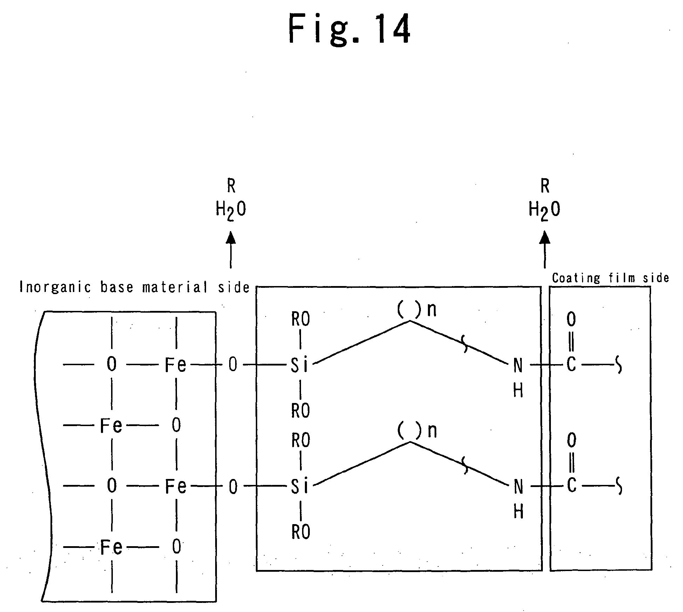

Figure 14 is an explanatory drawing which shows how the base material 11, coating layer 12 and thermoplastic resin layer 13 of Figure 13 are bonded together. The organic functional group of organosilane reacts with the carboxyl group or ester carbonyl group, etc. of the thermoplastic resin layer 13, discharges alcohol and water, and performs chemical bonding under the formation of an amide, for example. Also, the inorganic silyl group reacts with the hydroxyl groups on the surface of the bas material 11, discharges alcohol, and forms a chemical bond in such a manner as to share oxygen.

Due to these chemical bonds the organic thermoplastic resin layer 13 is strongly bonded to the inorganic base material 11 via the coating layer 12. Unlike usual adhesives, paint films, etc., organosilane acts effectively in such a thickness that one molecular layer covers the surface of the base material 11 and, therefore, organosilane has little substantial effect on the physical shape of the surface of the base material 11. However, because organosilane having chloride, for example, vinyltrichlorosilane discharges hydrochloric acid, and not alcohol during a reaction, it is desirable not to use organosilanes having chloride depending on the kind of the base material 11.

### Second embodiment

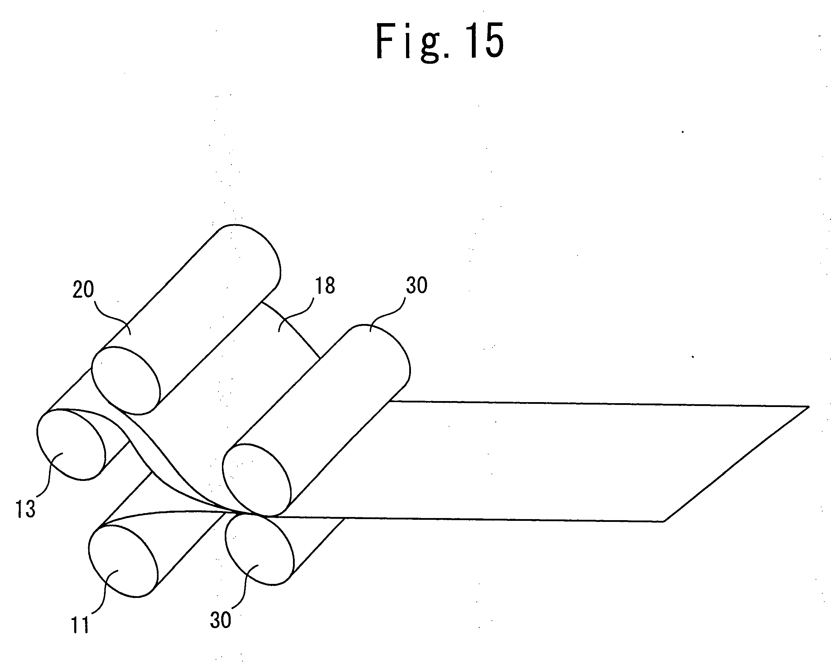

Figure 15 is a perspective view of a method of manufacturing a decorative member in the second embodiment of the present invention.

As shown in Figure 15, a thermoplastic resin layer 13 is superposed in such a manner as to come into contact with a coating layer 12 on a base material 11 formed in sheet shape and so that a receiving layer 15 of a pattern sheet 18 and the thermoplastic resin layer 13 come into contact with each other. And in this superposed state, vacuum contact bonding is performed and the thermoplastic resin layer 13 is heated and melted. And roll contact bonding is performed by use of heating and pressurizing rollers 30 and the thermoplastic resin layer 13 is heated and melted. Also in this form, the present invention can be easily carried out.

### Industrial Applicability

As described above, a decorative member related to the present invention and a manufacturing method thereof are useful for decorative panels for an elevator and the like. Especially, a pattern sheet can be more strongly bonded by increasing the surface area of a base material. Also, the manufacturing time can be substantially shortened. In a decorative member manufactured by this manufacturing method, a color pattern is sandwiched between an ink receiving layer and a thermoplastic resin layer after the completion of vacuum contact bonding and, therefore, the decorative member becomes less susceptible to affects from outside. For this reason, the decorative member is less susceptible to effects of scratching and cleaning work after the completion of working and a quality finish with a luster on the surface is obtained by a simple process. Furthermore, the use of vacuum contact bonding enables matter detrimental to ornamental design, such as dust, from mixing in between the pattern sheet, the thermoplastic resin layer and the base material.

Because the coating layer and the ink receiving layer are transparent, it is possible to impart a unique aesthetic property to the decorative member by superposing color patterns on the texture of the substrate of the base material.

Because the ink receiving layer is made from a material in which the crosslinked polymerization of a resin proceeds due to heating, it is unnecessary to separately provide a protective film for an ornamental design surface and it is possible to obtain a highly durable ornamental design surface.

Furthermore, because the pattern sheet is such that the ink receiving layer is formed on a separator, which is peeled off after solvent welding. Therefore, the ink receiving layer itself becomes a transparent protective and it is unnecessary to separately provide a protective film for an ornamental design surface. Thus a highly durable ornamental design surface can be obtained.

## Claims

1. A decorative member comprising:
a base material(11) made from an inorganic material;
a coating layer(12) which is formed on a surface of this base material(11) and contains organosilane;
a thermoplastic resin layer(13) which is heated and solvent welded onto this coating layer(12) by vacuum contact bonding; and
an ink receiving layer(15) superposed on this thermoplastic resin layer(13) in such a manner that a surface on which a color pattern(16) by a coloring material is formed is in contact with the thermoplastic resin layer(13) without an adhesive, and which is bonded onto the base material(11) by the solvent welding of the thermoplastic resin layer(13) itself which occurs due to the vacuum contact bonding.

2. A decorative member comprising:
a base material(11) made from an inorganic material;
a coating layer (12)which is formed on a surface of this base material(11) and contains organosilane;
a thermoplastic resin layer(13) which is heated and solvent welded onto this coating layer(12) by vacuum contact bonding;
an ink receiving layer(15) superposed on this thermoplastic resin layer(13) in such a manner that a surface on which a color pattern(16) by a coloring material is formed is in contact with the thermoplastic resin layer(13) without an adhesive; and which is bonded onto the base material(11) by the solvent welding of the thermoplastic resin layer(13) itself which occurs due to the vacuum contact bonding; and
a separator(14) which is provided on a surface of this ink receiving layer(15) on which a color pattern(16) is not formed and which is peeled off when unnecessary.

3. A method of manufacturing a decorative member comprising:
the step of fabricating a pattern sheet(18) having an ink receiving layer(15) in which a color pattern(16) by a coloring material is formed;
the step of superposing a thermoplastic resin layer(13) and the pattern sheet(18) on a
base material(11) so that a surface of the pattern sheet(18) which is bonded to a surface of the base material(11) made from an inorganic material and on which a color pattern(16) is
formed is bonded to the thermoplastic resin layer(13) without an adhesive; and
the step of heating and solvent welding the thermoplastic resin layer(13) by vacuum contact bonding, thereby to bond the pattern sheet(18) onto the base material(11).

4. A method of manufacturing a decorative member comprising:
the step of fabricating a pattern sheet(18) having an ink receiving layer(15) in which a color pattern(16) by a coloring material is formed;
the step of forming a coating layer(12) containing organosilane on a surface of a base material(11) made from an inorganic material;
the step of superposing a thermoplastic resin layer(13) and the pattern sheet(18) on the base material(11) so that the thermoplastic resin layer(13) is bonded to the coating layer(12) and a surface of the pattern sheet(18) on which a color pattern(16) is formed is
bonded to the thermoplastic resin layer(13) without an adhesive; and
the step of heating and solvent welding the thermoplastic resin layer(13) by vacuum contact bonding, thereby to bond the pattern sheet(18) onto the coating layer(12).

5. The method of manufacturing a decorative member according to claim 3 or 4, **characterized in that** the ink receiving layer(15) is transparent.

6. The method of manufacturing a decorative member according to claim 4, **characterized in that** the coating layer(12) is transparent.

7. The method of manufacturing a decorative member according to claim 5, **characterized in that** the ink receiving layer(15) is a material which contains a thermoplastic resin the crosslinked polymerization of which proceeds due to heating.

8. The method of manufacturing a decorative member according to claim 3 or 4, **characterized in that** in the pattern sheet(18), the ink receiving layer(15) is formed on a separator(14), which is peeled off after solvent welding.
